# EUROPEAN PATENT APPLICATION

(11) **EP 4 083 883 A1**
(43) Date of publication of application: **02.11.2022**
(21) Application number: 22169170.2
(22) Date of filing: 21.04.2022
(51) Int. Cl.: G06Q 10/08, G09B 1/00

(54) **A METHOD FOR MONITORING A PRODUCTION CYCLE OF A PRODUCT OR A BATCH OF PRODUCTS, PARTICULARLY IN THE PHARMACEUTICAL FIELD**

(30) Priority: 28.04.2021 IT 202100010679
(71) Applicant: G.D S.p.A., 40133 Bologna (BO) (IT)
(72) Inventor: TESTONI, Luca, I-40133 Bologna (IT); LANZARINI, Luca, I-40133 Bologna (IT)
(74) Representative: Frontoni, Stefano

(57) **Abstract**

A method is described for monitoring a production cycle of a product (S) or a batch of products, which is executed by at least one machine comprising a production line (12) performing one or more steps of the production cycle:
The method comprises:
- selecting at least one component (16) of the production line and associating a component-identification code (Cc) with the component;
- executing the production cycle for producing a product (S) or a batch of products and associating a product-identification code (Cp) with the product or batch of products;
- creating a data-element (100A) for the product-identification code, within a database (100), comprising the product-identification code (Cp) and the component-identification code (Cc) of the component (16) of the production line.

## Description

### Field and object of the invention

The present invention relates to a method for monitoring a production cycle of a product or a batch of products, particularly in the pharmaceutical field, which is executed by at least one machine comprising a production line performing one or more steps of the production cycle.

As part of the quality control of products made in an industrial process, in particular in the pharmaceutical sector, it is known to record a series of operating parameters of the industrial process, for example, date, time, statistical data, etc., with a view to adopting appropriate precautions in the event that a quality control on the product determines a non-conformity (for example, a contamination) of the product itself. In these cases, indeed, it is essential to be able to determine the cause of the non-conformity of the product by tracing back to the life cycle of the machine components (i.e. the materials, the related production process, etc.) in order to verify their adequacy. In particular, it is necessary to investigate the life cycle of the machine components in direct or indirect contact with the product deemed non-compliant.

In this context, the present invention proposes to provide a solution for monitoring a production cycle of a product or a batch of products, which is more effective than the prior art.

In general, the solution described here relates to a method having the characteristics of claim 1. The solution described here also relates to a system according to claim 7.

The claims form an integral part of the disclosure provided here.

### Brief description of the drawings and detailed description of one or more embodiments of the invention

Further characteristics and advantages of the present invention will become evident from the description that follows with reference to the attached drawings, provided purely by way of non-limiting example, wherein:

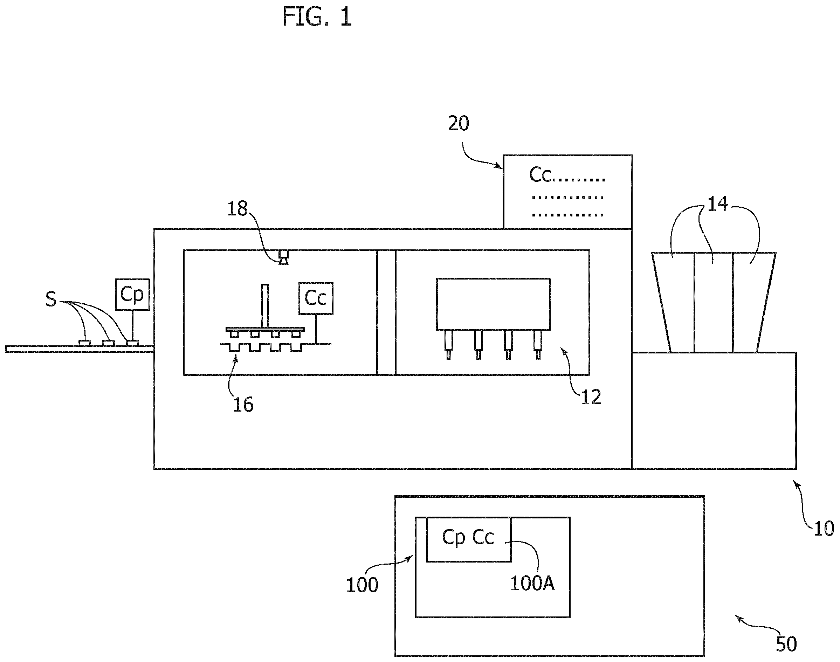

- Figure 1 schematically represents an example of a system that implements the method described here.

In the following description various specific details are illustrated aimed at a thorough understanding of the embodiments. The embodiments may be implemented without one or more of the specific details, or with other methods, components, materials, etc. In other cases, known structures, materials or operations are not shown or described in detail to avoid obscuring various aspects of the embodiments.

The references used here are only for convenience and do not therefore define the field of protection or the scope of the embodiments.

As anticipated above, the solution described here concerns a method for monitoring a production cycle of a product or a batch of products, which is executed by at least one machine comprising a production line performing one or more steps of the production cycle:
The solution described here is particularly advantageous in the pharmaceutical field. In any case, it can also be advantageously adopted in other fields, such as food, cosmetics, etc.

By way of example, with reference to Figure 1, the method described here may relate to the monitoring of a production cycle of tablets S implemented by a machine 10 having a production line 12, which is configured for forming tablets S starting from powdered material fed from containers 14.

In general, the monitoring method comprises the following steps:
- selecting at least one component of the production line and associating a component-identification code with the component;
- executing the production cycle for producing a product or a batch of products, and associating a product-identification code with the product or batch of products;
- creating a data-element for the product-identification code, within a database, comprising the product-identification code and the component-identification code of the component of the production line.

In view of the above, the method described here involves considering one or more components of the machine, in particular those in direct or indirect contact with the product, as factors responsible for the quality of the product or products made and, therefore, to record them for each production cycle in association with the product or products made from the cycle.

Clearly, several component-identification codes can be associated with each product-identification code.

Advantageously, the method according to the invention allows obtaining the list of machine components that have contributed to the production of each product or batch of products. It is, therefore, possible to automatically access the information necessary to perform a detailed analysis in the event that a quality control reveals non-compliance (for example, a contamination) of the product itself.

As indicated above, this is done by generating a component-identification code which is combined with a product-identification code in a data-element within a database.

As mentioned above, the component selected for the monitoring described above may be either a component in direct contact with the products or the relative semi-finished products during the production cycle, or a component not intended for direct contact.

For example, the selected component or the selected components may be components/members for forming, dosing, transporting, processing, etc. of the products, the relative semi-finished products or the relative packages.

In general, it will be understood that the type of component selected may depend on the type of quality control expected on the products. In a per se known manner, a quality control may envisage measuring or detecting a characteristic of the product and comparing the measured or detected datum with a reference datum.

With reference to the example of Figure 1 relating to a production cycle of tablets S, the method described here can advantageously select a mold 16 for forming the tablets, in view of a quality control, which envisages verification of the dimensions or hardness of the tablets S.

Again by way of example, the method described here can advantageously select one or more components in direct contact with the products or the relative semi-finished products during the production cycle, in view of a quality control that involves verifying any contamination of the products by foreign material.

The production cycle could relate, according to another example not illustrated, to a liquid product of the pharmaceutical sector. In this case, a possible contamination could be due to the presence in the liquid of foreign material, comprising, for example, metal particles that would be detected following an inspection/quality control.

In one or more preferred embodiments, such as the one illustrated, the component-identification code - indicated with "Cc" in Figure 1 - is reproduced directly on the component with which it is associated, in order to facilitate identifying the correct code for each component.

In particular, in one or more preferred embodiments, such as the one illustrated, the method includes the steps of:
- by means of a reading device 18, detecting the component-identification code carried by the component; and
- memorizing the component-identification code on a memory unit 20.

In one or more preferred embodiments, the component-identification code Cc is reproduced on the component by means of one of the following actions:
- printing the component-identification code on the component;
- engraving the component-identification code on the component;
- applying a radio-frequency identification element on the component, on which the component-identification code is memorized.

The type of reading device 18 may vary according to the way in which the component-identification code is reproduced on the component; therefore, it could, for example, be a camera, a laser scanner, an RFID reader, etc.

The reading device 18 may be used whenever a new component replaces a component of the machine used in the monitoring method described here, in order to automatically load the component-identification code of the new component onto the memory unit 20.

For example, the reading device 18 may be used whenever a component needs to be replaced to allow washing, maintenance or format change operations.

This ensures that the identification codes used are always up-to-date and correct. The reading device 18 may be integrated into the machine itself (as in the case schematized in Figure 1) or it can be used by the operator when assembling the component in the machine.

In preferred embodiments, the component-identification code is a Data Matrix code (for example, of the ECC200 type or a QR code).

Preferably, the component-identification code comprises at least one piece of data indicative of the origin of the component, and at least one piece of data indicative of a component type and at least one piece of data univocally indicative of the specific component.

For example, the component-identification code may include data indicative of the supplier who supplied the component. In addition, the component-identification code may include data indicative of the category to which the component belongs, for example, one of "forming part", "processing part", "transport part", etc., or a piece of data indicative of the commercial name of the component.

Furthermore, the component-identification code may include further data regarding structural and/or functional characteristics of the component, for example, materials, treatments received, function performed, etc.

As seen above, the monitoring method described here envisages the generation of a data-element 100A (Figure 1) for each production cycle, within a database 100, containing the product-identification code Cp and the component-identification code Cc. A control unit 50 may be set up to perform this function. The control unit 50 is configured to receive the component-identification codes stored in the memory unit 20.

The data-element may be any unique code that associates the product-identification code and the component-identification code together, and that allows the two identification codes to be extracted together following an appropriate query of the database.

For example, the database may be in the form of a table and the data-element consists of a row or column of the table. The database may be implemented as software loaded on the control unit 50.

In view of the above, the monitoring method described here therefore envisages creating a database containing the product-identification code and the component-identification code for each production cycle performed.

This database has the advantage of providing an effective and immediately available tool to investigate the possible causes of a non-compliant production quality that was detected for a given product or a given batch of products (for example, a contamination).

In this circumstance, the database in question may, in fact, be queried to determine the component-identification code associated with the product or batch of non-compliant products, in order to verify whether the component used for producing the product or batch of products has determined the non-compliant production quality or not, and, in which case, take the necessary countermeasures. Finally, it will be noted that, according to the method described here, the data-element 100A may also contain - together with the identification codes Cp and Cc - further data relating to the production cycle of the product or batch of products, for example, a selection of its operating parameters. Of course, without prejudice to the principle of the invention, the details of construction and the embodiments may vary, even significantly, with respect to those illustrated here, purely by way of non-limiting example, without departing from the scope of the invention as defined by the attached claims.

## Claims

1. A method for monitoring a production cycle of a product (S) or a batch of products, particularly in the pharmaceutical field, which is executed by at least one machine (10) comprising a production line (12) performing one or more steps of the production cycle, the method comprising:
- selecting at least one component (16) of the production line and associating a component-identification code (Cc) with the component;
- executing the production cycle for producing a product (S) or a batch of products and associating a product-identification code (Cp) with the product or batch of products;
- creating a data-element (100A) for the product-identification code, within a database (100), comprising the product-identification code (Cp) and the component-identification code (Cc) of the component (16) of the production line.

2. A method according to claim 1, wherein the component (16) of the production line carries the relative component-identification code (Cc) on itself, the method including:
- by means of a reader device (18) detecting the component-identification code (Cc) that is carried by the component (16); and
- memorizing the component-identification code (Cc) on a memory unit (20).

3. A method according to claim 2, including reproducing the component-identification code (Cc) on the component (16) by means of one of the following actions:
- printing the component-identification code (Cc) on the component;
- engraving the component-identification code (Cc) on the component;
- applying a radio-frequency identification element on the component, on which the component-identification code (Cc) is memorized.

4. A method according to any one of the preceding claims, wherein the component-identification code (Cc) includes at least one piece of data that is indicative of the origin of the component, at least one piece of data that is indicative of the component type, and at least one piece of data that is univocally indicative of the specific component.

5. A method according to any one of the preceding claims, wherein the component-identification code (Cc) is a Data Matrix code.

6. A method according to any one of the preceding claims, comprising:
- executing a quality control on the product (S) or on the batch of products; and
- extracting the component-identification code (Cc) from the database if the quality of the product (S) or the batch of products is not compliant with a given reference.

7. A system for monitoring a production cycle of a product or a batch of products, particularly in the pharmaceutical field, comprising:
- at least one machine (10) comprising a production line (12) performing one or more steps of the production cycle;
- a memory unit (20) on which a component-identification code (Cc) is memorized that is associated with at least one component (16) of the production line; and
- a control unit (50) configured to associate a product-identification code (Cp) with the product (S) or batch of products made in each production cycle, and, for each product-identification code (Cp), to create a data-element (100A), within a database (100), comprising the product-identification code (Cp) and the component-identification code (Cc) of the component (16) of the production line.

8. A system according to claim 7, wherein the component (16) of the production line carries the relative component-identification code (Cc) on itself.

9. A system according to claim 8, wherein:
- the component-identification code (Cc) is printed on the component; or
- the component-identification code (Cc) is engraved on the component; or
- a radio-frequency identification element is applied on the component, on which the component-identification code (Cc) is memorized.

10. A system according to any one of claims 7 to 9, wherein the memory unit (20) is configured to be set in communication with a reader device (18) for detecting a component-identification code (Cc) that is carried by a new component.

11. A system according to any one of claims 7 to 10, wherein the component-identification code (Cc) is preferably a Data Matrix code, and includes at least one piece of data that is indicative of the origin of the component, at least one piece of data that is indicative of the component type, and at least one piece of data that is univocally indicative of the specific component.
